(19) Europäisches Patentamt
European Patent Office
Office européen des brevets

(11) **EP 4 242 177 A1**

(12) # EUROPEAN PATENT APPLICATION
published in accordance with Art. 153(4) EPC

(43) Date of publication:
**13.09.2023 Bulletin 2023/37**

(21) Application number: **21889242.0**

(22) Date of filing: **04.11.2021**

(51) International Patent Classification (IPC):
**C02F 1/48** $^{(2023.01)}$

(52) Cooperative Patent Classification (CPC):
**C02F 1/48**

(86) International application number:
**PCT/JP2021/040644**

(87) International publication number:
**WO 2022/097690 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.11.2020 JP 2020186070**

(71) Applicant: **Daido Metal Company Ltd.
Nagoya-shi, Aichi 460-0008 (JP)**

(72) Inventor: **IMAOKA Soshi
Inuyama-shi, Aichi 484-0061 (JP)**

(74) Representative: **Algemeen Octrooi- en
Merkenbureau B.V.
P.O. Box 645
5600 AP Eindhoven (NL)**

(54) **RECOVERY SYSTEM**

(57) A removing system (11) includes: an anode and a cathode configured to oppose active materials to each other to form a first passage (12), the anode and the cathode adsorbing ions in response to the application of direct current potential between the active materials; a second passage (14) configured to form a path for liquid (18) containing ions at a concentration equal to or higher than a predetermined level; and a third passage 16 configured to connect a path for diluting liquid (19) to the second passage (14) to mix the liquid (18) with the diluting liquid (19), the third passage (16) serving to supply to the first passage (12) liquid containing ions at a concentration lower than the predetermined level. It is possible to provide a removing system effectively adsorbs ions.

FIG. 1

EP 4 242 177 A1

## Description

Technical Field

The present invention relates to a removing system comprising an anode and a cathode opposing active materials forming a passage between the active materials and adsorbing ions in response to direct current potential acting between the opposed active materials.

Background Art

Patent Literature 1 discloses a wastewater treatment system employing an electric double layer. The wastewater treatment system comprises an anode and a cathode forming an electric double layer in response to the application of direct current voltage. The anode and the cathode adsorb ions in the electric double layer formed on the surface of activated carbon fibers. The adsorbed ions can be released from the anode and the cathode in response to the application of the reverse voltage. Ions are removed in this manner. This type of method is in general called "CDI (capacitive deionization)".

Citation Lists

Patent Literatures

1: Japan Patent No. 6,570,692

Summary of Invention

Technical Problem

In general, the conductivity of an aqueous solution gets higher as the ion concentration gets higher in the aqueous solution. A higher conductivity tends to induce the precipitation of ions. The anode and the cathode cannot adsorb the precipitated ions. The precipitation hinders an efficient adsorption of ions. In addition, since the precipitated ions float in the aqueous solution, additional means is required to remove ions other than the release of ions from the anode and the cathode.

An object of the present invention is to provide a removing system capable of adsorbing ions in an efficient manner.

Solution to Problem

One aspect of the present invention is to provide a removing system comprising: an anode and a cathode configured to oppose active materials to each other to form a first passage, the anode and the cathode adsorbing ions in response to the application of direct current potential between the active materials; a second passage configured to form a path for liquid containing ions at a concentration equal to or higher than a predetermined level; and a third passage configured to connect a path for diluting liquid to the second passage to mix the liquid with the diluting liquid, the third passage serving to supply to the first passage liquid containing ions at a concentration lower than the predetermined level.

When direct current potential is formed between the anode and the cathode, the anode and the cathode serve to adsorb ions in the liquid passing through the first passage. Since the concentration of the ions in the first passage is set at the concentration lower than the predetermined level, the ions are reliably (or mostly) prevented from precipitation, the anode and the cathode adsorb ions in an efficient manner.

The removing system may further comprise: a first sensor configured to detect the concentration of the ions in the liquid flowing into the second passage; a second sensor configured to detect the concentration of the ions in the diluting liquid flowing into the third passage; a first valve disposed in the second passage to adjust a flow rate of the liquid passing through the second passage; a second valve disposed in the third passage to adjust a flow rate of the diluting liquid passing through the third passage; and a control circuit configured to control opening degrees of the first valve and the second valve based on the concentrations detected at the first sensor and the second sensor. The opening degrees of the first valve and the second valve are controlled based on the concentration of the ions in the liquid and the concentration of the ions in the diluting liquid. The proportion of the diluting liquid in the liquid can appropriately be changed. The concentration of the ions can be adjusted in the liquid passing through the first passage.

Advantageous Effects of Invention

As described above, according to the disclosed removing system, ions can be adsorbed in an efficient manner.

Brief Description of Drawings

[FIG. 1] is a block diagram schematically illustrating the structure of a removing system according to one embodiment of the present invention;
[FIG. 2] is a sectional schematic view illustrating the structure of a CDI, capacitive deionization, unit;
[FIG. 3] is a schematic view of an electric double layer formed inside a pore of an active material; and
[FIG. 4] is a schematic view of an electric double layer formed inside a pore of an active material when the concentration of ions falls below a predetermined level.

Reference Signs List

11: a removing system, 12: a first passage, 14: a second passage, 16: a third passage, 18: liquid (solution), 19: a diluting liquid, 21: a first valve (a first flow controlling valve), 22: a second valve (a second flow controlling valve), 32: a first sensor, 33: a second sensor, 34: a control circuit, 36: an anode or cathode (a first electrode), 37: a cathode or anode (a second electrode), 38a: active material, and 38b: active material.

Description of Embodiments

Description will be made below on one embodiment of the present invention with reference to the attached drawings.

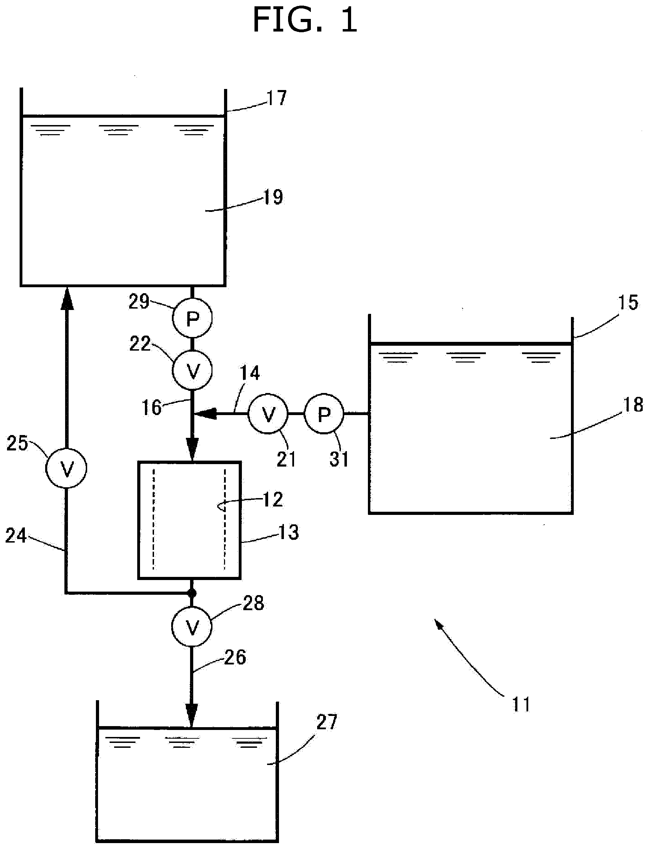

FIG. 1 schematically illustrates the structure of a removing system according to one embodiment of the present invention. The removing system 11 comprises: a CDI, capacitive deionization, unit 13 configured to form a first passage 12; a first reservoir 15 connected to the first passage 12 of the CDI unit 13 through a second passage 14; and a second reservoir 17 connected to the first passage 12 of the CDI unit 13 through a third passage 16 merging with the second passage 14. The first reservoir 15 is configured to hold solution 18 containing ions, to be removed, such as metal ions, for example. The solution 18 may include an electrolytic solution used in an electrolytic plating process, for example. The solution 18 contains ions, for example, metal ions such as bismuth, at a concentration equal to or higher than a predetermined level.

The second reservoir 17 is configured to hold a diluting liquid 19 capable of reducing the concentration of the ions in the solution 18 when the diluting liquid 19 is mixed with the solution 18 in the first reservoir 15. The diluting liquid 19 may include water, for example. The diluting liquid 19 may be the solvent of the solution 18.

The second passage 14 is defined in a piping extending from the first reservoir 15 to the CDI unit 13. The second passage 14 is configured to form a path for liquid containing ions at a concentration equal to or higher than a predetermined level. The third passage 16 is defined in a piping extending from the second reservoir 17 to merge with the piping of the second passage 14. The third passage 16 is configured to unite the path of the diluting liquid 19 into the path of the solution 18 to blend the diluting liquid 19 into the solution 18.

A first flow controlling valve 21 is disposed in the second passage 14. The first flow controlling valve 21 is configured to adjust the flow rate of the solution 18 passing through the path of the second passage 14. The first flow controlling valve 21 may be an electromagnetic or solenoid valve configured to open by the opening degree determined in a controlling signal in response to the supply of the controlling signal. The opening degree of the first flow controlling valve 21 serves to set the flow rate of the solution 18.

A second flow controlling valve 22 is disposed in the third passage 16. The second flow controlling valve 22 is configured to adjust the flow rate of the diluting liquid 19 passing through the third passage 16. The second flow controlling valve 22 may be an electromagnetic or solenoid valve configured to open by the opening degree determined in a controlling signal in response to the supply of the controlling signal. The opening degree of the second flow controlling valve 22 serves to set the flow rate of the diluting liquid 19.

The removing system 11 further comprises a fourth passage 24 extending from the first passage 12 of the CDI unit 13 to the second reservoir 17. The diluting liquid 19 flowing out of the CDI unit 13 returns to the second reservoir 17. A first on-off valve 25 is disposed in the fourth passage 24 to adjust the flow rate of the diluting liquid passing through the fourth passage 24, hereinafter this liquid called "circulating liquid". The first on-off valve 25 may be an electromagnetic or solenoid valve configured to open or close in response to the supply of a controlling signal, for example. The opening or shutoff of the first on-off valve 25 serves to allow or shut off the flow of the circulating liquid.

The removing system 11 further comprises a third reservoir 27 connected to the first passage 12 of the CDI unit 13 through a fifth passage 26 bifurcating from the fourth passage 24 between the CDI unit 13 and the first on-off valve 25. The third reservoir 27 is configured to hold liquid containing the ions released from the CDI unit 13, hereinafter this liquid called "condensed liquid".

A second on-off valve 28 is disposed in the fifth passage 26 to adjust the flow rate of the condensed liquid passing through the fifth passage 26. The second on-off valve 28 may be an electromagnetic or solenoid valve configured to open or close in response to the supply of a controlling signal, for example. The opening or shutoff of the second on-off valve 27 serves to allow or shut off the flow of the condensed liquid.

The second reservoir 17, the third passage 16, the CDI unit 13 (the first passage 12) and the fourth passage 24 form a circulating path. The diluting liquid 19 circulates through the circulating path. A liquid pump 29 is disposed in the circulating path. The liquid pump 29 is configured to generate the circulation of the diluting liquid 19 under a predetermined pressure. The liquid pump 29 may be located in the third passage 16 between the second reservoir 17 and the second flow controlling valve 22, for example.

A liquid pump 31 may be disposed in the second passage 14 to reinforce the flow of the solution 18 out of the first reservoir 15. The liquid pump 31 may be configured to discharge the solution 18 under a predetermined pressure. The liquid pump 31 may be located in the second passage 14 between the first reservoir 15 and the first flow controlling valve 21, for example.

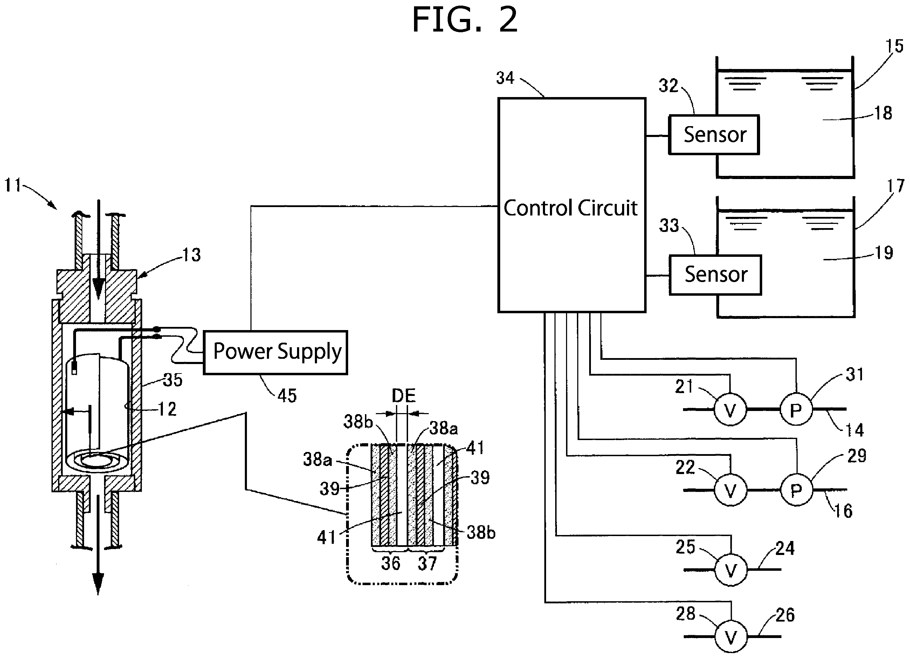

As depicted in FIG. 2, the removing system 11 further includes: a first sensor 32 configured to detect the concentration of the ions in the solution 18 flowing into the second passage 14; a second sensor 33 configured to detect the concentration of the ions in the diluting liquid 19 flowing into the third passage 16; and a control circuit 34 electrically connected to the first sensor 32 and the second sensor 33 to control the opening degrees of the first flow controlling valve 21 and the second flow controlling valve 22 based on the concentrations detected at the first sensor 32 and the second sensor 33, respectively. The first sensor 32 may be located in the first reservoir 15, for example. The second sensor 33 may be located in the second reservoir 17, for example. The first and second sensors 32, 33 may be a TDS, total dissolved solids, meters, respectively, for example.

The CDI unit 13 includes a first electrode 36 and a second electrode 37 located in a cylinder 35 defining the first passage 12. The first electrode 36 and the second electrode 37 are spaced at a predetermined distance DE. The first electrode 36 and the second electrode 37 are made of conductive sheets 39, respectively, holding active materials 38a, 38b on the front and back surfaces of the sheets 39. The active materials 38a, 38b may be made of activated carbon sheets superposed on the front and back surfaces of the conducive sheets 39, for example. The conductive sheet 39 may be a carbon sheet. An insulating layer 41 covers over the surface of the active material 38b on the back surface of the conductive sheet 39. When the first electrode 36 and the second electrode 37 are layered, the insulating layer 41 serves to insulate the first electrode 36 and the second electrode 37 from each other. Since the insulating layer 41 is formed in a mesh structure, liquid is allowed to pass through between the first electrode 36 and the second electrode 37. The first electrode 36 and the second electrode 37 may be layered in multiple layers.

The insulating layer 41 may comprise a polyethylene mesh laid over on the surface of the activated carbon sheet, and a PTFE, polytetrafluoroethylene, sheet overlaid on the surface of the polyethylene mesh. The PTFE sheet may be formed in a mesh structure. The polyethylene mesh in this case serves to ensure insulation between the first electrode 36 and the second electrode 37 even if any fragments fall off from the active material 38b. The PTFE sheet in this case serves to form a path for liquid while keeping a space between the first electrode 36 and the second electrode 37. The polyethylene mesh may have thickness equal to 0.1[mm], for example.

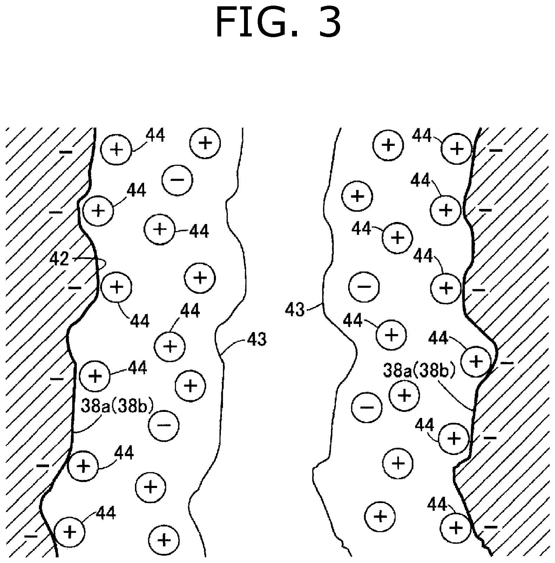

Here, as depicted in FIG. 3, the active materials 38a, 38b are formed of a porous material, for example. When direct current potential is applied between the first electrode 36 and the second electrode 37, an electric double layer 43 is formed on the surface of the active materials 38a, 38b inside a pore 42. The electric double layer 43 serves to catch ions 44 in the pore 42. The thickness of the electric double layer 43, namely the debye length $\kappa^{-1}$, is formulated as follows:

[Equation 1]

$$\kappa = \sqrt{\frac{8\pi n e^2 v^2}{\varepsilon k T}}$$

where 'ε' is dielectric permittivity of a liquid, 'k' is Boltzmann constant, 'T' is absolute temperature, 'n' is ion density, 'e' is electronic charge, and 'v' is the number of ions, valence of counterion. The interference of the electric double layer 43 can be avoided in the pore 42 based on the adjustment of the concentration of ions.

A power supply 45 is connected to the first electrode 36 and the second electrode 37 to supply direct current power to the first electrode 36 and the second electrode 37. The power supply 45 serves to generate the electric potential between the first electrode 36 and the second electrode 37. The power supply 45 is switched over between a first mode and a second mode. Direct current runs from the first electrode 36 to the second electrode 37 in the first passage 12 in the first mode. Direct current runs from the second electrode 37 to the first electrode 36 in the first passage 12 in the second mode. Specifically, the first electrode 36 functions as an anode while the second electrode 37 functions as a cathode in the first mode. The first electrode 36 functions as a cathode while the second electrode 37 functions as an anode in the second mode. The active materials 38a, 38b of the first electrode 36 adsorb anions in the liquid passing through the insulating layer 41 in the first mode of the power supply 45. The active materials 38a, 38b of the second electrode 37 likewise adsorb cations in the liquid in the first mode. The cations attached to the first electrode 36 are released from the first electrode 36. The anions attached to the second electrode 37 are released from the second electrode 37. The active materials 38a, 38b of the second electrode 37 adsorb anions in the liquid passing through the insulating layer 41 in the second mode of the power supply 45. The active materials 38a, 38b of the first electrode 36 likewise adsorb cations in the liquid in the second mode. The cations attached to the second electrode 37 are released from the second electrode 37. The anions attached to the first electrode 36 are released from the first electrode 36. Here, the insulating layer 41 serves to ensure the distance DE equal to 10[mm] at the minimum between the first electrode 36 and the second electrode 37, for example. If the distance DE exceeds 10[mm], the electric resistance excessively increases in the liquid between the first electrode 36 and the second electrode 37 so that a sufficient flow of direct current cannot be established for adsorption of anions and cations.

The first flow controlling valve 21, the second flow controlling valve 22, the first on-off valve 25, the second on-off valve 28, and the liquid pumps 29, 31, in addition to the first sensor 32 and the second sensor 33, are electrically connected to the control circuit 34. The control circuit 34 is configured to generate controlling signals for the first flow controlling valve 21, the second flow controlling valve 22, the first on-off valve 25, the second on-off valve 28, and the liquid pumps 29, 31. The control circuit 34 is configured to calculate the mixing ratio of the solution 18, that flows into the first passage 12 from the second passage 14, for the diluting liquid 19 flowing into the first passage 12 from the third passage 16, to determine the opening degrees of the first flow controlling valve 21 and the second flow controlling valve 22. The mixing ratio enables the establishment of liquid containing ions at a concentration lower than a predetermined level. The concentration of the ions is kept equal to or higher than a predetermined threshold.

Next, description will be made on the operation of the removing system 11. The control circuit 34 is set to assume an adsorption mode. The adsorption mode allows the opening of the first on-off valve 25 and the shutoff of the second on-off valve 28. The second reservoir 17 is filled with the diluting liquid 19. When the liquid pump 29 operates, the diluting liquid 19 circulates through the second reservoir 17, the third passage 16, the CDI unit 13 (the first passage 12) and the fourth passage 24 in sequence.

The first reservoir 15 is filled with the solution 18. When the liquid pump 31 operates, the solution 18 is allowed to flow into the second passage 14. The control circuit 34 operates to control the opening degree of the first flow controlling valve 21 and the opening degree of the second flow controlling valve 22. The flow rate of the solution 18 and the flow rate of the diluting liquid 19 are controlled, so that the concentration of ions is set lower than a predetermined level in the liquid flowing into the first passage 12. The control circuit 34 receives detection signals from the first sensor 32 and the second sensor 33 to adjust the flow rate of the solution 18 and the diluting liquid 19. The detection signals specify the concentration of ions based on the conductivity, for example.

The control circuit 34 sets the first mode of the power supply 45. Direct current potential is applied between the first electrode 36 (cathode) and the second electrode 37 (anode). Electric double layers 43 are formed over the surfaces of the active materials 38a, 38b in the pores 42 of the active materials 38a, 38b. The electric double layers 43 serve to catch ions 44 in the pores 42. Ions are adsorbed in the first electrode 36 and the second electrode 37 from the liquid flowing in the first passage 12. Since the concentration of the ions are set lower than the predetermined level in the first passage 12, the active materials 38a, 38b catch ions in an efficient manner.

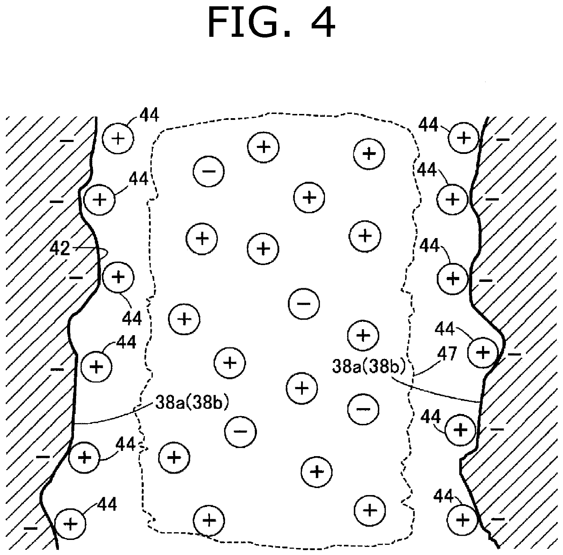

Here, the concentration of the ions is kept equal to or higher than the predetermined threshold in the liquid flowing into the first passage 12, the thickness of the electric double layers 43 can be set equal to or smaller than a predetermined thickness, depending on the size of the pores 42, on the surfaces of the active materials 38a, 38b. As a result, the interference of the electric double layers 43 is avoided in the pores 42. The electric double layers 43 can be kept in a good status in the pores 42. The active materials 38a, 38b are allowed to adsorb ions in an efficient manner. If the concentration of ions falls below the predetermined threshold, the thickness of the electric double layers 43 gets increased in the pores 42, as depicted in FIG. 4, so that interference 47 is caused for the electric double layers. The interference 47 of the electric double layers hinders the adsorption of ions. The efficiency of the adsorption reduces.

The control circuit 34 is then set to assume a release mode. The release mode allows the shutoff of the first on-off valve 25 and the opening of the second on-off valve 28. When the liquid pump 29 operates, the diluting liquid 19 flows into the third reservoir 27 from the second reservoir 17 via the third passage 16, the CDI unit 13 (the first passage 12) and the fifth passage 26 in sequence. The liquid pump 31 stops operating. The first flow controlling valve 21 is closed.

In this case, the control circuit 34 sets the second mode of the power supply 45. The cathode and the anode are switched over in the first electrode 36 and the second electrode 37. Direct current potential is applied between the first electrode 36 (anode) and the second electrode 37 (cathode). Ions are released from the first electrode 36 and the second electrode 37 in the diluting liquid 19 passing through the first passage 12. The condensed liquid flows into the third reservoir 27. Ions are removed and collected as the condensed liquid in this manner.

The removing system 11 according to the embodiment comprises the third passage 16 configured to mix the diluting liquid 19 with the solution 18 to supply the first passage 12 with liquid containing ions at a concentration lower than the predetermined level. The application of direct current potential between the cathode and the anode enables adsorption of ions in the liquid flowing in the first passage 12. Since the concentration of ions is set lower than the predetermined level in the first passage 12, the ions are reliably (or mostly) prevented from precipitation. The anode and the cathode are allowed to remove ions in an efficient manner.

The removing system 11 of the embodiment comprises: the first sensor 32 configured to detect the concentration of the ions in the solution 18 flowing into the second passage 14; the second sensor 33 configured to detect the concentration of the ions in the diluting liquid 19 flowing into the third passage 16; the first flow controlling valve 21 disposed in the second passage 14 to adjust the flow rate of the solution 18 passing through the second passage 14; and the second flow controlling valve 22 disposed in the third passage 16 to adjust the flow rate of the diluting liquid 19 passing through the third passage 16. The control circuit 34 serves to control the opening degrees of the first flow controlling valve 21 and the second flow controlling valve 22 based on the concentrations detected at the first sensor 32 and the second sensor 33, respectively. The opening degrees of the first flow controlling valve 21 and the second flow controlling valve 22 are controlled based on the concentration of the ions in the solution 18 and the concentration of the ions in the diluting liquid 19. The proportion of the solution 18 in the diluting liquid 19 can appropriately be changed. The concentration of the ions can be adjusted in the liquid passing through the first passage 12.

This embodiment provides mixture of the solution 18 with the diluting liquid 19 prior to the entry into the CDI unit 13 for the adsorption of ions. Even if the solution 18 suffers from a lower flow rate or a smaller whole amount, the diluting liquid 19 serves to ensure a sufficient flow rate or whole amount of the liquid flowing through the first passage 12. The first electrode 36 and the second electrode 37 are allowed to fully contact with the liquid in the first passage 12. Ions are thus efficiently adsorbed. The active materials 38a, 38b are prevented from exposure to gas.

The removing system 11 of the embodiment allows adjustment of the concentration of ions in the liquid flowing into the CDI unit 13 based on the mixture of the solution 18 with the diluting liquid 19. The dilution of the solution 18 enables the concentration of ions in the liquid flowing out of the CDI unit 13 to approximate to the concentration of ions in the diluting liquid 19 in the second reservoir 17. The ions in the diluting liquid 19 can be kept at a constant concentration in the second reservoir 17. The ions are prevented from staying in the second reservoir 17. The ions can fully be removed from the solution 18.

## Claims

1. A removing system, comprising:

   an anode and a cathode configured to oppose active materials to each other to form a first passage, the anode and the cathode adsorbing ions in response to the application of direct current potential between the active materials;
   a second passage configured to form a path for liquid containing ions at a concentration equal to or higher than a predetermined level; and
   a third passage configured to connect a path for diluting liquid to the second passage to mix the liquid with the diluting liquid, the third passage serving to supply to the first passage liquid containing ions at a concentration lower than the predetermined level.

2. The removing system as defined in claim 1, further comprising:

   a first sensor configured to detect the concentration of the ions in the liquid flowing into the second passage;
   a second sensor configured to detect the concentration of the ions in the diluting liquid flowing into the third passage;
a first valve disposed in the second passage to adjust a flow rate of the liquid passing through the second passage;
a second valve disposed in the third passage to adjust a flow rate of the diluting liquid passing through the third passage; and
a control circuit configured to control opening degrees of the first valve and the second valve based on the concentrations detected at the first sensor and the second sensor.

# FIG. 1

# FIG. 2

EP 4 242 177 A1

# FIG. 3

EP 4 242 177 A1

# FIG. 4

## INTERNATIONAL SEARCH REPORT

International application No.

**PCT/JP2021/040644**

### A. CLASSIFICATION OF SUBJECT MATTER

*C02F 1/48*(2006.01)i
FI: C02F1/48 B

According to International Patent Classification (IPC) or to both national classification and IPC

### B. FIELDS SEARCHED

Minimum documentation searched (classification system followed by classification symbols)

C02F1/48

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/193901 A1 (MITSUBISHI ELECTRIC CORPORATION) 10 October 2019 (2019-10-10)<br>claims, paragraphs [0002], [0012]-[0030], [0038]-[0047], [0057]-[0069], [0071]-[0073], fig. 1, 2 | 1 |
| Y | | 2 |
| Y | US 2014/0001054 A1 (TENNANT COMPANY) 02 January 2014 (2014-01-02)<br>paragraphs [0056]-[0065], fig. 4 | 2 |
| Y | JP 8-206459 A (TAKUMA COMPANY LIMITED) 13 August 1996 (1996-08-13)<br>paragraphs [0010]-[0016], [0021]-[0024], fig. 1, 4 | 2 |
| A | JP 2002-273439 A (KURITA WATER INDUSTRIES LIMITED) 24 September 2002 (2002-09-24)<br>claims, paragraphs [0020]-[0039], fig. 1-8 | 1-2 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2021/040644**

| Patent document cited in search report | | | Publication date (day/month/year) | Patent family member(s) | | | Publication date (day/month/year) |
|---|---|---|---|---|---|---|---|
| WO | 2019/193901 | A1 | 10 October 2019 | US | 2021/0053849 | A1 | |
| | | | | claims, paragraphs [0002], [0036]-[0054], [0062]-[0071], [0081]-[0093], [0095]-[0097], fig. 1, 2 | | | |
| | | | | EP | 3778497 | A1 | |
| | | | | CN | 111936428 | A | |
| US | 2014/0001054 | A1 | 02 January 2014 | WO | 2014/004977 | A1 | |
| | | | | EP | 2866634 | A1 | |
| | | | | CN | 104602586 | A | |
| JP | 8-206459 | A | 13 August 1996 | (Family: none) | | | |
| JP | 2002-273439 | A | 24 September 2002 | (Family: none) | | | |

Form PCT/ISA/210 (patent family annex) (January 2015)

**EP 4 242 177 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6570692 B